(19) Europäisches Patentamt
European Patent Office
Office européen des brevets

(11) EP 3 720 890 B1

(12) **EUROPEAN PATENT SPECIFICATION**

(45) Date of publication and mention of the grant of the patent:
**28.12.2022 Bulletin 2022/52**

(21) Application number: **18795633.9**

(22) Date of filing: **31.10.2018**

(51) International Patent Classification (IPC):
***C08F 210/02*** *(2006.01)* ***C08F 2/01*** *(2006.01)*
***C08F 2/34*** *(2006.01)*

(52) Cooperative Patent Classification (CPC):
(C-Sets available)
**C08F 210/02; C08F 2/01; C08F 2/34** (Cont.)

(86) International application number:
**PCT/EP2018/079821**

(87) International publication number:
**WO 2019/110205 (13.06.2019 Gazette 2019/24)**

(54) **USE OF ANTIMICROBIAL ETHYLENE COPOLYMERS FOR PACKAGING APPLICATIONS**

VERFAHREN ZUR HERSTELLUNG VON ANTIMIKROBIELLEN ETHYLENCOPOLYMEREN

PROCÉDÉ DE PRODUCTION DE COPOLYMÈRES D’ÉTHYLÈNE ANTIMICROBIENS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.12.2017 EP 17205679**

(43) Date of publication of application:
**14.10.2020 Bulletin 2020/42**

(73) Proprietor: **SABIC Global Technologies B.V.
4612 PX Bergen op Zoom (NL)**

(72) Inventors:
- **VACHON, Jerome
6160 GA Geleen (NL)**
- **NEUTEBOOM, Peter
6160 GA Geleen (NL)**
- **CASTANEDA ZUNIGA, Diego Mauricio
6160 GA Geleen (NL)**
- **DUCHATEAU, Jan Nicolaas Eddy
6160 GA Geleen (NL)**

(74) Representative: **Sabic Intellectual Property Group
Sabic Intellectual Property Department
P.O. Box 3008
6160 GA Geleen (NL)**

(56) References cited:
**EP-A1- 0 331 528 WO-A1-2007/135040**

- **S. C. KIM ET AL: "Properties of ethylene-dimethylaminoethylmethacrylate copolymers as poly(vinyl chloride) resin modifier (Technical Report)", PURE & APPLIED CHEMISTRY, vol. 66, no. 6, 1 January 1994 (1994-01-01), pages 1405-1414, XP055471714, GB ISSN: 0033-4545, DOI: 10.1351/pac199466061405**
- **ZHIQIANG SONG ET AL: "GRAFTING OF 2-(DIMETHYLAMINO)ETHYL METHACRYLATE ON LINEAR LOW DENSITY POLYETHYLENE IN THE MELT", ANGEWANDTE MAKROMOLEKULARE CHEMIE. APPLIED MACROMOLECULARCHEMISTRY AND PHYSICS, WILEY VCH, WEINHEIM, DE, vol. 181, 1 October 1990 (1990-10-01), pages 1-22, XP000175778, ISSN: 0003-3146, DOI: 10.1002/APMC.1990.051810101**
- **AZUMA M ET AL: "Ultradrawing of blend films of ethylene-dimethyl-aminoethyl methacrylate copolymer and ultra-high molecular weight polyethylene prepared by gelation/crystallization from solutions", POLY, ELSEVIER SCIENCE PUBLISHERS B.V, GB, vol. 45, no. 2, 1 January 2004 (2004-01-01), pages 409-421, XP004481737, ISSN: 0032-3861, DOI: 10.1016/J.POLYMER.2003.09.031**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 720 890 B1

(52) Cooperative Patent Classification (CPC): (Cont.)

C-Sets
**C08F 210/02, C08F 2/00;**
**C08F 210/02, C08F 2/01;**
**C08F 210/02, C08F 2/34;**
**C08F 210/02, C08F 220/34, C08F 2500/12;**
**C08F 210/02, C08F 220/56, C08F 2500/12;**
**C08F 210/02, C08F 220/60, C08F 2500/12**

## Description

The present invention relates to the use of an ethylene copolymer for production of packaging applications, production of food packages or production of film applications.

Low density polyethylene is used for a long time in various packaging applications such as bottles, containers, shrink films, poly bags, ziplock bags, poly tubing, liquid packaging and bags. Most commonly LDPE is used for the production of films. About 63% of the production goes into that market. Reasons for that are low production costs and excellent properties such as high clarity, heat seal-ability, high elongation, and softness.

Of particular importance are packaging materials and in particular films for packaging of food. Thereby the food is preserved throughout the whole distribution chain. The packaging protects the food from being contaminated. However, in recent years there has been a demand for novel packaging material that increases the shelf life, safety and quality stability of food during storage, handling and transportation. Of particular importance is microbial stability.

Microbial stability is often achieved by adding biocides as additives to the packaging material. However, those additives migrate in an uncontrolled manner out of the packaging material. Often a fast release of these additive is observed which leads to an initially high concentration of the active compound in the environment. This is a major drawback as it results in the time limitation of the biocidal activity. Furthermore, such biocides have been shown to support the formation of resistant antimicrobial strains. Finally, the use of migrating biocides towards the food can be negatively perceived by the consumer as an additional chemical additive due the organoleptic perceptions.

Antimicrobial polymers constitute a better alternative, since no migration of chemicals takes place. Antimicrobial polymers are polymers that consist of repeating units of a particular compound that, in its monomeric unit possess antimicrobial activity.

The objective of this invention is to provide a process for the production of antimicrobial polymers with high antimicrobial activity and a molecular weight sufficiently high to produce films which can for example be used in packaging applications.

This has now been achieved by use of an ethylene copolymer having a melt flow index (MFI) of at most ≤ 45 g/10 min as measured according to ISO1133:2011 measured at 190 °C and 2.16 kg and/or having an average molecular weight Mw ≥ 50 kg/mol for production of packaging applications, production of food packages or production of film applications, wherein the ethylene copolymer is obtained via a process for the production of ethylene copolymers in a free-radical high-pressure polymerization in a tubular reactor, wherein

- the process comprises a feed composition comprising ethylene and one or more co-monomers as reactants wherein at least one of the co-monomers is a compound having the structure of Formula (I):

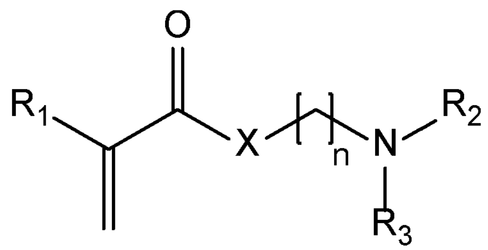

Formula (I)

wherein

$R_1$ = H or $CH_3$;
X = O or NH;
n = 1-10
$R_2$, $R_3$ = H or $CH_3$ or saturated aliphatic structure consisting of hydrogen atoms and 1-10 carbon atoms, wherein the aliphatic structure can be linear, branched and/or cyclic; and wherein $R_2$ and $R_3$ can be individually selected; and wherein

- the tubular reactor is operated at a pressure of ≥ 200 and ≤ 280 MPa;
- the average reaction peak temperature is ≥ 220°C and ≤ 300°C;
- the composition comprising one or more of co-monomers is fed to the reactor in one or more feed inlets of said tubular reactor; and
- each co-monomer according to Formula (I) is fed to the tubular reactor in quantities of ≤ 2.0 mol % with regard to

the total feed composition of ethylene and the one or more co-monomers,

wherein the production of packaging applications, production of food packages or production of film applications is performed by converting the ethylene copolymer into a film.

In the process for obtaining the ethylene copolymer for use the ethylene copolymer may have a melt flow index (MFI) of at least ≥ 0.10 g/10min or at least ≥ 1.0 g/10min or at most ≤ 40 g/10min or at most ≤ 30 g/10min or at most ≤ 15 g/10min or at most ≤ 10 g/10min, as measured according to ISO1133:2011 measured at 190 °C and 2.16 kg.

For example, the ethylene polymers for use according to the present invention may have a MFI of at most ≤ 40 g/10min, alternatively at most ≤ 35 g/10min, alternatively at most ≤ 30 g/10min, alternatively at most ≤ 25 g/10min, alternatively at most ≤ 20 g/10min, alternatively at most ≤ 15 g/10min, alternatively at most ≤ 10 g/10min.

The ethylene copolymers for use according to the present inventionmay preferably have a MFI as measured according to ISO1133:2011 of ≥ 0.1 g/10 min and ≤ 45 g/10 min, alternatively of ≥ 0.1 g/10 min and ≤ 40 g/10 min, alternatively of ≥ 0.1 g/10 min and ≤ 35 g/10 min, alternatively of ≥ 0.1 g/10 min and ≤ 30 g/10 min, alternatively of ≥ 0.1 g/10 min and ≤ 20 g/10 min, alternatively of ≥ 0.1 g/10 min and ≤ 15 g/10 min.

The ethylene copolymers for use according to the present invention may more preferably have a MFI of ≥ 1 g/10 min and ≤ 45 g/10 min, alternatively of ≥ 1 g/10 min and ≤ 40 g/10 min, alternatively of ≥ 1 g/10 min and ≤ 35 g/10 min, alternatively of ≥ 1 g/10 min and ≤ 30 g/10 min, alternatively of ≥ 1 g/10 min and ≤ 20 g/10 min, alternatively of ≥ 1 g/10 min and ≤ 15 g/10 min.

The ethylene copolymers for use according to the present invention may most preferably have a MFI of ≥ 1.0 g/10 min and ≤ 45 g/10 min, alternatively of ≥ 1.0 g/10 min and ≤ 40 g/10 min, alternatively of ≥ 1.0 g/10 min and ≤ 35 g/10 min, alternatively of ≥ 1.0 g/10 min and ≤ 30 g/10 min, alternatively of ≥ 1.0 g/10 min and ≤ 20 g/10 min, alternatively of ≥ 1.0 g/10 min and ≤ 15 g/10 min.

In the process for obtaining the ethylene copolymer for use according to the invention the co-monomer content in the feed composition may comprise at least ≥ 0.05 mol% or at least ≥ 0.08 mol%, or at least ≥ 0.1 mol% of one or more co-monomers and at most ≤ 0.6 mol% or at most ≤ 0.8 mol% or at most ≤ 1.0 mol% or at most ≤ 2.0 mol% with respect to the total feed composition of ethylene and the one or more co-monomers.

In the process for obtaining the ethylene copolymer for use according to the invention the co-monomer content in the feed composition may preferably comprise least ≥ 0.05 mol% and at most ≤ 2.0 with respect to the total mol% of ethylene feed and the feed of the one or more co-monomers, alternatively at least ≥ 0.08 mol% and at most ≤ 1.0 mol%, alternatively at least ≥ 0.1 mol% and at most ≤ 0.8.

In the process for obtaining the ethylene copolymer for use according to the invention the content of the co-monomer in the ethylene copolymer may be at least ≥ 0.2 mol% or at least ≥ 0.3 mol%, or at least ≥ 0.4 mol% of one or more co-monomers and/or at most ≤ 3.5 mol%, at most ≤ 4 mol% or at most ≤ 5 mol% or at most ≤ 6 mol% with respect to the total mol% of ethylene and the one or more co-monomers in the ethylene copolymer.

In a preferred embodiment, the ethylene copolymer may have a co-monomer content of ≥ 0.10 and ≤ 6.0 mol% with respect to the total mol% in the ethylene copolymer. Preferably, the co-monomer content may range from ≥ 0.20 and ≤ 6.0 mol% with respect to the total mol% in the ethylene copolymer. More preferably, the co-monomer content may range from ≥ 0.20 and ≤ 4.5 mol% with respect to the total mol% in the ethylene copolymer. More preferably, the co-monomer content may range from ≥ 0.30 and ≤ 3.5 mol% with respect to the total mol% of ethylene and the one or more co-monomers in the ethylene copolymer.

In the context of the present invention, the ethylene copolymer may comprises ≥ 80 mol% of ethylene units with respect to the total mol% of ethylene and the one or more co-monomers in the ethylene copolymer. More preferably ≥ 90%, alternatively ≥ 95%, alternatively ≥ 96%.

In a preferred embodiment according to the invention the co-monomer may be a compound according to Formula (II)

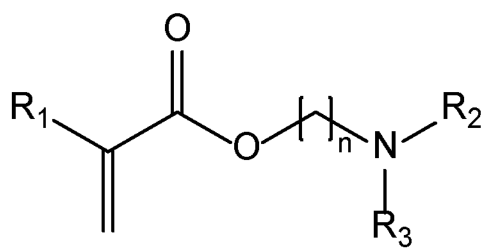

Formula (II)

wherein

R1 = H or $CH_3$;
n = 1-10
$R_2$, $R_3$ = H or $CH_3$ or saturated aliphatic structure consisting of hydrogen atoms and 1-10 carbon atoms, wherein the aliphatic structure can be linear, branched and/or cyclic; and wherein $R_2$ and $R_3$ can be individually selected.

In a preferred embodiment according to the invention, the co-monomer may be selected from 2-Aminoethyl methacrylate, 2-Aminoethyl acrylate, 2-(Dimethylamino)ethyl methacrylate, 2-(Dimethylamino)ethyl acrylate, 3-(Dimethylamino)propyl methacrylate, 3-(Dimethylamino)propyl acrylate, 2-(Diethylamino)ethyl methacrylate, 2-(Diethylamino)ethyl acrylate, 2-(tert-Butylamino)ethyl methacrylate, 2-(tert-Butylamino)ethyl acrylate, 2-(Diisopropylamino)ethyl methacrylate, 2-(Diisopropylamino)ethyl acrylate, 2-Methylaminoethyl methacrylate, 2-Dimethylaminopropyl methacrylate, 2-Aminoethylmethacrylamide, N-[3-(Dimethylamino)propyl]methacrylamide and/or N-(3-Aminopropyl)methacrylamide.

In a preferred embodiment, the process relates to the production of ethylene copolymers in a free-radical high-pressure polymerization in a tubular reactor, wherein the process comprises a feed composition comprising ethylene and one or more co-monomers as reactants wherein at least one of the co-monomers may be a compound selected from selected from 2-Aminoethyl methacrylate, 2-Aminoethyl acrylate, 2-(Dimethylamino)ethyl methacrylate, 2-(Dimethylamino)ethyl acrylate, 3-(Dimethylamino)propyl methacrylate, 3-(Dimethylamino)propyl acrylate, 2-(Diethylamino)ethyl methacrylate, 2-(Diethylamino)ethyl acrylate, 2-(tert-Butylamino)ethyl methacrylate, 2-(tert-Butylamino)ethyl acrylate, 2-(Diisopropylamino)ethyl methacrylate, 2-(Diisopropylamino)ethyl acrylate, 2-Methylaminoethyl methacrylate, 2-Dimethylaminopropyl methacrylate, 2-Aminoethylmethacrylamide, N-[3-(Dimethylamino)propyl]methacrylamide and/or N-(3-Aminopropyl)methacrylamide.

and wherein

- the tubular reactor is operated at a pressure of ≥ 200 and ≤ 280 MPa;
- the average reaction peak temperature is ≥ 220°C and ≤ 300°C;
- the composition comprising one or more of co-monomers is fed to the reactor in one or more feed inlets of said tubular reactor; and
- each co-monomer according to Formula (I) is fed to the tubular reactor in quantities of ≤ 2.0 mol % with regard to the total feed composition,

and wherein the obtained ethylene copolymer
has a co-monomer content of at least at least ≥ 0.2 mol% and at most ≤ 6 mol% with respect to the total mol% of ethylene and the one or more co-monomers.
and wherein the obtained ethylene copolymer
has a melt flow index (MFI) of at least ≥ 0.10 g/10min and at most ≤ 45 g/10min, as measured according to. ISO1133:2011 measured at 190 °C and 2.16 kg.

In a preferred embodiment, the process relates to the production of ethylene copolymers in a free-radical high-pressure polymerization in a tubular reactor, wherein the process comprises a feed composition comprising ethylene and one or more co-monomers as reactants wherein at least one of the co-monomers is a compound selected from 2-Aminoethylmethacrylamide, N-[3-(Dimethylamino)propyl]methacrylamide and/or N-(3-Aminopropyl)methacrylamide.
and wherein

- the tubular reactor is operated at a pressure of ≥ 200 and ≤ 280 MPa;
- the average reaction peak temperature is ≥ 220°C and ≤ 300°C;
- the composition comprising one or more of co-monomers is fed to the reactor in one or more feed inlets of said tubular reactor; and
- each co-monomer according to Formula (I) is fed to the tubular reactor in quantities of ≤ 2.0 mol % with regard to the total feed composition,

and wherein the obtained ethylene copolymer
has a co-monomer content of at least at least ≥ 0.2 mol% and at most ≤ 6 mol% with respect to the total mol% of ethylene and the one or more co-monomers.
and wherein the obtained ethylene copolymer
has a melt flow index (MFI) of at least ≥ 0.10 g/10min and at most ≤ 45 g/10min, as measured according to. ISO1133:2011 measured at 190 °C and 2.16 kg.

In a preferred embodiment, the process relates to the production of ethylene copolymers in a free-radical high-pressure polymerization in a tubular reactor, wherein the process comprises a feed composition comprising ethylene and one or more co-monomers as reactants wherein at least one of the co-monomers is a compound selected from selected from 2-Aminoethyl methacrylate, 2-Aminoethyl acrylate, 2-(Dimethylamino)ethyl methacrylate, 2-(Dimethylamino)ethyl acrylate, 3-(Dimethylamino)propyl methacrylate, 3-(Dimethylamino)propyl acrylate, 2-(Diethylamino)ethyl methacrylate, 2-(Diethylamino)ethyl acrylate, 2-(tert-Butylamino)ethyl methacrylate, 2-(tert-Butylamino)ethyl acrylate, 2-(Diisopropylamino)ethyl methacrylate, 2-(Diisopropylamino)ethyl acrylate, 2-Methylaminoethyl methacrylate, 2-Dimethylaminopropyl methacrylate, 2-Aminoethylmethacrylamide, N-[3-(Dimethylamino)propyl]methacrylamide and/or N-(3-Aminopropyl)methacrylamide.
and wherein

- the tubular reactor is operated at a pressure of ≥ 200 and ≤ 280 MPa;
- the average reaction peak temperature is ≥ 220°C and ≤ 300°C;
- the composition comprising one or more of co-monomers is fed to the reactor in one or more feed inlets of said tubular reactor; and
- each co-monomer according to Formula (I) is fed to the tubular reactor in quantities of ≤ 2.0 mol % with regard to the total feed composition,

and wherein the obtained ethylene copolymer
has a co-monomer content of at least at least ≥ 0.2 mol% and at most ≤ 3.5 mol% with respect to the total mol% of ethylene and the one or more co-monomers.
and wherein the obtained ethylene copolymer
has a melt flow index (MFI) of at least ≥ 0.10 g/10min and at most ≤ 45 g/10min, as measured according to. ISO1133:2011 measured at 190 °C and 2.16 kg.

Process for obtaining the ethylene copolymer for use according to the invention wherein the ethylene copolymer may have an antimicrobial activity as measured by a log R value according to ISO22196 characterised in that log R is at least ≥ 4 for E. Coli and at least ≥ 3.5 for S. Aureus.

In a preferred embodiment, the process relates to the production of ethylene copolymers in a free-radical high-pressure polymerization in a tubular reactor, wherein the process comprises a feed composition comprising ethylene and one or more co-monomers as reactants wherein at least one of the co-monomers is a compound selected from selected from 2-Aminoethyl methacrylate, 2-Aminoethyl acrylate, 2-(Dimethylamino)ethyl methacrylate, 2-(Dimethylamino)ethyl acrylate, 3-(Dimethylamino)propyl methacrylate, 3-(Dimethylamino)propyl acrylate, 2-(Diethylamino)ethyl methacrylate, 2-(Diethylamino)ethyl acrylate, 2-(tert-Butylamino)ethyl methacrylate, 2-(tert-Butylamino)ethyl acrylate, 2-(Diisopropylamino)ethyl methacrylate, 2-(Diisopropylamino)ethyl acrylate, 2-Methylaminoethyl methacrylate, 2-Dimethylaminopropyl methacrylate, 2-Aminoethylmethacrylamide, N-[3-(Dimethylamino)propyl]methacrylamide and/or N-(3-Aminopropyl)methacrylamide.
and wherein

- the tubular reactor is operated at a pressure of ≥ 200 and ≤ 280 MPa;
- the average reaction peak temperature is ≥ 220°C and ≤ 300°C;
- the composition comprising one or more of co-monomers is fed to the reactor in one or more feed inlets of said tubular reactor; and
- each co-monomer according to Formula (I) is fed to the tubular reactor in quantities of ≤ 1.0 mol % with regard to the total feed composition,

and wherein the obtained ethylene copolymer
has a co-monomer content of at least at least ≥ 0.2 mol% and at most ≤ 6 mol% with respect to the total mol% of ethylene and the one or more co-monomers.
and wherein the obtained ethylene copolymer
has a melt flow index (MFI) of at least ≥ 0.10 g/10min and at most ≤ 45 g/10min, as measured according to. ISO1133:2011 measured at 190 °C and 2.16 kg and wherein the obtained ethylene copolymer
has an antimicrobial activity as measured by a log R value according to ISO22196 characterised in that log R is at least ≥ 4 for E. Coli and at least ≥ 3.5 for S. Aureus.

In a preferred embodiment, the process relates to the production of ethylene copolymers in a free-radical high-pressure polymerization in a tubular reactor, wherein the process comprises a feed composition comprising ethylene and one or more co-monomers as reactants wherein at least one of the co-monomers is a compound selected from 2-Aminoethylmethacrylamide, N-[3-(Dimethylamino)propyl]methacrylamide and/or N-(3-Aminopropyl)methacrylamide. and wherein

- the tubular reactor is operated at a pressure of ≥ 200 and ≤ 280 MPa;
- the average reaction peak temperature is ≥ 220°C and ≤ 300°C;
- the composition comprising one or more of co-monomers is fed to the reactor in one or more feed inlets of said tubular reactor; and
- each co-monomer according to Formula (I) is fed to the tubular reactor in quantities of ≤ 1.0 mol % with regard to the total feed composition,

and wherein the obtained ethylene copolymer
has a co-monomer content of at least at least ≥ 0.2 mol% and at most ≤ 6 mol% with respect to the total mol% of ethylene and the one or more co-monomers.
and wherein the obtained ethylene copolymer
has a melt flow index (MFI) of at least ≥ 0.10 g/10min and at most ≤ 45 g/10min, as measured according to. ISO1133:2011 measured at 190 °C and 2.16 kg,
and wherein the obtained ethylene copolymer
has an antimicrobial activity as measured by a log R value according to ISO22196 characterised in that log R is at least ≥ 4 for E. Coli and at least ≥ 3.5 for S. Aureus.

In a preferred embodiment, the process relates to the production of ethylene copolymers in a free-radical high-pressure polymerization in a tubular reactor, wherein the process comprises a feed composition comprising ethylene and one or more co-monomers as reactants wherein at least one of the co-monomers is a compound selected from selected from 2-Aminoethyl methacrylate, 2-Aminoethyl acrylate, 2-(Dimethylamino)ethyl methacrylate, 2-(Dimethylamino)ethyl acrylate, 3-(Dimethylamino)propyl methacrylate, 3-(Dimethylamino)propyl acrylate, 2-(Diethylamino)ethyl methacrylate, 2-(Diethylamino)ethyl acrylate, 2-(tert-Butylamino)ethyl methacrylate, 2-(tert-Butylamino)ethyl acrylate, 2-(Diisopropylamino)ethyl methacrylate, 2-(Diisopropylamino)ethyl acrylate, 2-Methylaminoethyl methacrylate, 2-Dimethylaminopropyl methacrylate, 2-Aminoethylmethacrylamide, N-[3-(Dimethylamino)propyl]methacrylamide and/or N-(3-Aminopropyl)methacrylamide.
and wherein

- the tubular reactor is operated at a pressure of ≥ 200 and ≤ 280 MPa;
- the average reaction peak temperature is ≥ 220°C and ≤ 300°C;
- the composition comprising one or more of co-monomers is fed to the reactor in one or more feed inlets of said tubular reactor; and
- each co-monomer according to Formula (I) is fed to the tubular reactor in quantities of ≤ 1.0 mol % with regard to the total feed composition,

and wherein the obtained ethylene copolymer
has a co-monomer content of at least at least ≥ 0.2 mol% and at most ≤ 3.5 mol% with respect to the total mol% of ethylene and the one or more co-monomers.
and wherein the obtained ethylene copolymer
has a melt flow index (MFI) of at least ≥ 0.10 g/10min and at most ≤ 45 g/10min, as measured according to. ISO1133:2011 measured at 190 °C and 2.16 kg,
and wherein the obtained ethylene copolymer
has an antimicrobial activity as measured by a log R value according to ISO22196 characterised in that log R is at least ≥ 4 for E. Coli and at least ≥ 3.5 for S. Aureus.

The process for production of ethylene copolymers in a tubular reactor may for example be operated at a pressure of ≥ 200 MPa, alternatively ≥ 220 MPa, alternatively ≥ 240 MPa. Such free-radical high-pressure polymerisation process may for example be operated at a pressure of ≤ 280 MPa, alternatively ≤ 260 MPa, alternatively ≤ 250 MPa.
Preferably such free-radical high-pressure polymerisation process may be operated at a pressure of ≥ 200 MPa and ≤ 280 MPa, alternatively ≥ 220 MPa and ≤ 280 MPa, alternatively ≥ 220 MPa and ≤ 250 MPa.
Such process allows for the production of ethylene polymers at low energy consumption per quantity of ethylene copolymer produced.
Ethylene polymers for use according to the present invention may for example have a high purity and reduced extractables content.
Such tubular reactor may for example be a reactor having a length of ≥ 1000 m and ≤ 5000 m.

The tubular reactor may for example have a ratio of length to inner diameter of ≥ 1000:1, alternatively ≥ 10000:1, alternatively ≥ 25000:1, such as ≥ 10000:1 and ≤ 50000:1, alternatively ≥ 25000:1 and ≤ 35000:1.

The residence time may for example be ≥ 60 s and ≤ 300 s.

Such tubular reactors may for example have an inner tubular diameter of ≥ 0.01 m and ≤ 0.20 m, alternatively ≥ 0.04 m and ≤ 0.15 m.

The tubular reactor may for example have one or more inlet(s) and one or more outlet(s). The feed composition may for example be fed to the tubular reactor at the inlet of the tubular reactor. The ethylene polymer may for example be obtained from the outlet of the tubular reactor. The stream that exits the tubular reactor from the outlet may for example comprise ethylene copolymer. The stream that exits the tubular reactor from the outlet may for example further comprise unreacted feed composition. Such unreacted feed composition may be recycled into the tubular reactor via one or more inlet.

The tubular reactor for operating the process according to the present invention may be the sole reactor in a configuration for production of ethylene copolymers, or may be present in such configuration connected in series with one or more further tubular reactor(s) and/or one or more autoclave reactor(s). In such configuration involving multiple reactors in series, the tubular reactor for operating the process according to the present invention may be positioned as first reactor in such series. Alternatively, the tubular reactor for operating the process according to the present invention may be positioned subsequent to one or more further tubular reactor(s) and/or one or more autoclave reactor(s). For example, the tubular reactor for operating the process according to the present invention may be positioned as first reactor in such series connected to one further tubular reactor. Alternatively, the tubular reactor for operating the process according to the present invention may be positioned as first reactor in such series connected to one autoclave reactor.

The feed composition that enters the tubular reactor may for example comprise ethylene. The feed composition may for example comprise ≥ 80.00%, alternatively ≥ 85.00%, alternatively ≥ 90.00%, alternatively ≥ 95.00% by mol of ethylene, with regards to the total of said feed composition. The feed composition may for example comprise ≤ 99.99%, alternatively ≤ 99.95%, alternatively ≤ 99.90%, alternatively ≤ 99.50% by mol of ethylene, with regards to the total of said feed composition. For example, the feed composition may comprise ≥ 80.00% and ≤ 99.99%, alternatively ≥ 85.00% and ≤ 99.90%, alternatively ≥ 90.00% and ≤ 99.50% by mol of ethylene, with regard to the total of said feed composition.

The production of ethylene polymers in a tubular reactor may for example be operated using a temperature profile having one or more temperature peaks, such as for example 2 temperature peaks, alternatively 3 temperature peaks, alternatively 5 temperature peaks, alternatively 6 temperature peaks, preferably 4 temperature peaks. The average reaction peak temperature is to be understood to be the arithmetic mean of the temperatures of the peaks in the reaction temperature profile along the tubular reactor. For example, the process is operated at an average reaction peak temperature of ≥ 220 °C, alternatively ≥ 230 °C, alternatively ≥ 240 °C, alternatively ≥ 250 °C, alternatively ≥ 260°C, alternatively ≥ 270°C. Such temperature profile may be obtained by feeding a free-radical initiator composition at one or more feed inlets along the tubular reactor.

The production of ethylene copolymers at such average reaction peak temperatures leads to a comparatively high conversion rate. Conversion rate is to be understood to be the weight % of the feed composition that is converted to ethylene polymer during the reaction between feed at an inlet and removal at an outlet.

The free radical initiator composition may for example comprise one or more compounds selected from air, oxygen, organic peroxides or azo compounds.

Suitable organic peroxides for use in the initiator composition may for example include peroxy esters, peroxy ketals, peroxy ketones and peroxycarbonates, e.g. di(2-ethylhexyl) peroxydicarbonate, dicyclohexyl peroxydicarbonate, diacetyl peroxydicarbonate, tert-butyl peroxyisopropylcarbonate, di-tert-butyl peroxide, di-tert-amyl peroxide, dicumyl peroxide, 2,5-dimethyl-2,5-di-tert-butylperoxyhexane, tert-butyl cumyl peroxide, 2,5-dimethyl-2,5-di(tert-butylperoxy)hex-3-yne, 1,3-diisopropyl monohydroperoxide or tert-butyl hydroperoxide, didecanoyl peroxide, 2,5-dimethyl-2,5-di(2-ethylhexanoyl- peroxy) hexane, tert-amyl peroxy-2-ethylhexanoate, dibenzoyl peroxide, tert-butyl peroxy-2 ethylhexanoate, tert-butyl peroxydiethylacetate, tert-butyl peroxydiethylisobutyrate, tert-butyl peroxy- 3,5,5-trimethylhexanoate, 1,1 -di(tert-butylperoxy)-3,3,5-trimethylcyclohexane, 1,1 -di(tert-butylperoxy)cyclohexane, tert-butyl peroxyacetate, cumyl peroxyneodecanoate, tert-amyl peroxyneodecanoate, tert-amyl peroxypivalate, tert-butyl peroxyneodecanoate, tert-butyl permaleate, tert-butyl peroxypivalate, tert-butyl peroxyisononanoate, diisopropylbenzene hydroperoxide, cumene hydroperoxide, tert-butyl peroxy benzoate, methyl isobutyl ketone hydroperoxide, 3,6,9-triethyl-3,6,9-trimethyl-triperoxocyclononane, 3,3,6,6,9,9,-hexamethyl-1,2,4,5-tetraoxacyclononane, n-ethyl-4-4,-di-tert-butyl peroxyvalerate, ethyl-3,3,-di-tert-amyl peroxy butyrate, 2,2-di-4,4-di-tert-butyl peroxycyclohexyl propane, 1,1-di-tert-amyl peroxycyclohexane, 1,4-di-tert-butyl peroxycarbocyclohexane, 2,2-di(tert-butylperoxy)butane and t-butylperoxy 2-ethylhexanoate.

Azoalkanes (diazenes), azodicarboxylic esters, azodicarboxylic dinitriles such as azobisisobutyronitrile and hydrocarbons which decompose into free radicals and are also referred as C-C initiators,e.g. 1,2-diphenyl-1,2-dimethylethane derivatives and 1,1,2,2-tetramethylethane derivatives, may be also suitable.

In the process according to the invention the free radical initiator may preferably be a peroxide. More preferably

the peroxide may be t-butylperoxy 2-ethylhexanoate.

It is possible to use either individual initiators or preferably mixtures of various initiators. In general the concentration of added initiator is less than 300 ppm, alternatively less than 250 ppm, alternatively less than 200 ppm, with regard to the total of the materials fed to the tubular reactor. Thus, the resulting resins are not greatly contaminated by initiator residues and normally require no purification prior to use. The free radical initiator composition may for example be fed to the tubular reactor in a pure form or as a solution in a solvent. The solvent may comprise the co-monomer and/or one of more compound(s) selected from $C_2$-$C_{20}$ normal or iso-paraffins or mixtures thereof, such as for example mixtures of $C_{10}$-$C_{13}$ normal paraffins. The solutions comprise the initiators or initiator mixtures in proportions of from 2 to 65% by weight, preferably from 5 to 40% by weight and particularly preferably from 10 to 30% by weight.

In addition, further modifiers may be fed to the tubular reactor. Examples of such modifiers may include inhibitors, scavengers and/or chain transfer agents, such as aldehydes, ketones and aliphatic hydrocarbons. Such modifiers may for example be fed to the tubular reactor in a pure form or as a solution in a solvent.

Examples of suitable chain transfer agents include cyclopropane, methane, t-butanol, perfluoropropane, deuterobenzene, ethane, ethylene oxide, 2,2-dimethylpropane, benzene, dimethyl sulfoxide, vinyl methyl ether, methanol, propane, 2-methyl-3-buten-2-ol, methyl acetate, t-butyl acetate, methyl formate, ethyl acetate, butane, triphenylphosphine, methylamine, methyl benzoate, ethyl benzoate, N,N-diisopropylacetamide, 2,2,4-trimethylpentane, n-hexane, isobutane, dimethoxymethane, ethanol, n-heptane, n-butyl acetate, cyclohexane, methylcyclohexane, 1,2-dichlorethane, acetronitrile, N-ethylacetamide, propylene, n-decane, N,N-diethylacetamide, cyclopentane, acetic anhydride, n-tridecane, n-butyl benzoate, isopropanol, toluene, acetone, 4,4-dimethylpentene-1, trimethylamine, N,N-dimethylacetamide, isobutylene, n-butyl isocyanate, methyl butyrate, n-butylamine, N,N-dimethylformamide, diethyl sulfide, diisobutylene, tetrahydrofuran, 4-methylpentene-1, p-xylene, p-dioxane, trimethylamine, butene-2, 1-bromo-2-chlorethane, octene-1,2-methylbutene-2, cumene, butene-1, methyl vinyl sulfide, n-butyronitrile, 2-methylbutene-1, ethylbenzene, n-hexadecene, 2-butanone, n-butyl isothiocyanate, methyl 3-cyanopropionate, tri-n-butylamine, 3-methyl-2-butanone, isobutyronitrile, di-n-butylamine, methyl chloroacetate, 3-methylbutene-1, 1,2-dibromoethane, dimethylamine, benzaldehyde, chloroform, 2-ethylhexene-1, propionaldehyde, 1,4-dichlorobutene-2, tri-n-butylphosphine, dimethylphosphine, methyl cyanoacetate, carbon tetrachloride, bromotrichloromethane, di-n-butylphosphine, acetaldehyde , hydrogen and phosphine.

Preferably, the polymerization may be performed without the presence of a chain transfer agent.

The production of ethylene polymers in tubular reactors has the advantage that it allows for a controlled molecular weight distribution of the obtained polymers. The production of ethylene polymers in tubular reactors also presents an effective process in terms of low consumption of utilities such as for example cooling water and energy such as for example electrical energy. The production of ethylene polymers in tubular reactors allows for production of large quantities of ethylene polymers of a controlled quality.

The ethylene polymer is produced with a compressor energy consumption of ≤ 0.80 MW / ton ethylene polymer. For example, the compressor energy consumption may be ≤ 0.70 MW / ton ethylene polymer, alternatively ≤ 0.60 MW / ton ethylene polymer. The compressor energy consumption is to be understood to be the quantity of energy required to pressurize the feed composition from 25 MPa to the pressure required in the tubular reactor.

In an embodiment, the present invention may relate to use of an ethylene copolymer obtained via a process wherin the feed composition comprising one or more co-monomers is fed to the tubular reactor at a first feed inlet and at least a second feed inlet, in which said second feed inlet is located at a position along the tubular reactor downstream from said first inlet, in the direction of the product flow in the tubular reactor.

In an embodiment, the present invention may relate to use of an ethylene copolymer via a process wherein the composition comprising one or more free radical initiators that is fed to the tubular reactor at said first feed inlet is different in composition compared to the composition that is fed to the tubular reactor at said second feed inlet.

Co-monomers may be added at multiple inlets. Addition of co-monomers at multiple inlets may contribute to controlling the build-in of co-monomers into the ethylene polymer.

Tailoring the quantity and type of feed of co-monomers at different inlets may contribute to optimisation of the build-in of co-monomers into the ethylene polymers. Tailoring the quantity and type of free radical initiator at different inlets may contribute to controlling the average peak reaction temperature.

In an embodiment, the present invention may relate to use of the ethylene copolymer obtained via a free-radical high-pressure polymerization in a tubular reactor, wherein the process for the production of ethylene copolymers in a free-radical high-pressure polymerization in a tubular reactor, wherein

- the process comprises a feed composition comprising ethylene and one or more co-monomers as reactants wherein at least one of the co-monomers is a compound having the structure of Formula (I):

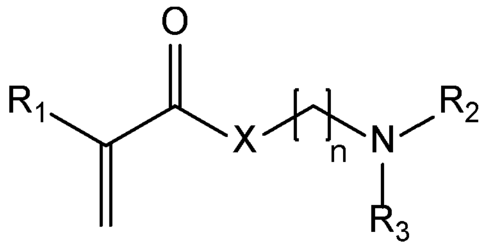

Formula (I)

wherein

$R_1$ = H or $CH_3$;
X = O or NH;
n = 1-10
$R_2$, $R_3$ = H or $CH_3$ or saturated aliphatic structure consisting of hydrogen atoms and 1-10 carbon atoms, wherein the aliphatic structure can be linear, branched and/or cyclic; and wherein $R_2$ and $R_3$ can be individually selected;

and wherein

- the tubular reactor is operated at a pressure of ≥ 200 and ≤ 280 MPa;
- the average reaction peak temperature is ≥ 220°C and ≤ 300°C;
- the composition comprising one or more of co-monomers is fed to the reactor in one or more feed inlets of said tubular reactor; and

each co-monomer according to Formula (I) is fed to the tubular reactor in quantities of ≤ 2.0 mol % with regard to the total feed composition of ethylene and the one or more co-monomers.

In a preferred embodiment, the ethylene copolymer for use according to the invention may have a melt flow index (MFI) of at least ≥ 0.10 g/10min or at least ≥ 1.0 g/10min and/or at most ≤ 45 g/10min or at most ≤ 40 g/10min or at most ≤ 30 g/10min or at most ≤ 15 g/10min or at most ≤ 10 g/10min, as measured according to. ISO1133:2011 measured at 190 °C and 2.16 kg. and / or having an average molecular weight Mw ≥ 50 kg/mol and ≤ 400 kg/mol.

Use of the ethylene copolymer obtained via the process according to the invention for production of packaging applications.

Use of the ethylene copolymer according to the invention for production of food packages. Use of the ethylene copolymer according to the invention for production of film applications.

Ethylene polymers obtained from the process according to the present invention may be suitable for use in applications such as for example certain healthcare applications and food packaging applications, such as flexible films for packaging of fresh foods such as for example fruit juices, dairy products, meat, cheese, fish, fruits, vegetables and/or baked goods. Due to the high polarity of the ethylene copolymer the material may be used as seal layer in packaging. The polarity of the ethylene copolymer is advantageous for its adhesion to PET, PA, PC and metals. The ethylene copolymer may also be used to produce soft foams. Ethylene polymers obtained from the process according to the present invention may be suitable for use in films for phosphate removal in water.

It is to be understood that the use of the ethylene copolymer according to the invention for production of a product means that the ethylene copolymer according to the invention is used without blending with a further polymer.

The invention further relates to use according to the invention wherein the production of packaging applications, production of food packages or production of film applications is performed by converting the ethylene copolymer into a film.

The invention further relates to use according to the invention wherein the converting the ethylene copolymer into the film is performed by film blowing.

The invention further relates to use according to the invention wherein the converting the ethylene copolymer is performed by film casting.

The invention further relates to use according to the invention wherein the packaging applications, the food packages or the film applications has a layer for coming into contact with food and at least 95 wt% of said layer is the ethylene copolymer.

The process according to the present invention may present a method to obtain the desired ethylene copolymers of certain high density by a process in which, by conducting the process in an operating window providing a balance of relatively low pressure and relatively high average reaction peak temperature, the productivity of the process is increased

and the energy consumption per quantity of ethylene polymer produced is reduced.

The invention will now be illustrated by the following non-limiting examples.

**Examples**

1. Raw materials

The following raw materials were used

- Ethylene : purity > 99.9% , Oxygen < 5ppm
- 2-(dimethylamino)ethyl methacrylate stabilized: purity 98%
- 2-(Diethylamino)ethyl acrylate
- N-[3-(Dimethylamino)propyl] methacrylamide
- Isopropanol purity > 99%
- Peroxide: Luperox 26

2. Experimental parameters

A continuous stirred autoclave reactor was used to produce the ethylene copolymer at an average of 0.6 kg copolymer/h. The autoclave reactor was operated at 200 °C and a pressure of 2000 bar. The ethylene flow rate was fixed at around 4 kg/h (residence time ~ 50 s) with a co-monomer flow of 0.2 mol% of co-monomer in the ethylene feed. The impeller velocity was fixed at 1540 rpm. The co-monomers shown in Scheme 1 were used.

Scheme 1: Chemical structure and short name of co-monomer.

| Co-monomer | Co-monomer short name |
|---|---|
| 2-(Dimethylamino)ethyl methacrylate | MADAME |
| 2-(Diethylamino)ethyl acrylate | DMAEA |
| N-[3-(Dimethylamino)propyl] methacrylamide | PMMA |

3. Test methods

a) NMR

The ethylene copolymer obtained was characterized by 1H NMR (400 MHz, in TCE at 55 °C).

b) Melt flow index (MFI)

The MFI is measured according to ISO1133:2011 measured at 190 °C and 2.16 kg.

c) Antimicrobial tests

- Compression molding compression molding was performed according to ISO1874, with a temperature of 120°C to avoid degradation of the material. Dimension of the bars 50×50×3.03 mm.
- Antimicrobial efficacy measurements were performed following ISO22196 "Measurement of antibacterial activity on plastics and other non-porous surfaces" using the following conditions:

    - Temperature of incubation: 32,5 ± 2,5°C ( instead of 35°C ± 1°C according to the ISO22196) Decontamination: Ethanol 70° during 15 minutes
    - Cover Film (type, size, shape, thickness): PET, 4 × 4 cm, square, around 1 mm
    - Contact time: 24h Test

- Temperature and culture temperature: 32.5°C ± 2.5°C
- Volume Inoculum Solution: 0.4 ml Nutrient Broth (fold 1/500)
- Washing solution: SCDLP
- Bacteria used strain: Escherichia coli DSM 1576 - ATCC 8739
- Staphylococcus aureus DSM 346 - ATCC 6538P
- Triplicate analysis - Negative control included
- Regular LDPE was used as a reference, LDPE "PCG00"

Antimicrobial activities are given in logarithmic reduction R.

R is calculated according to the bacterial concentration in the negative control and the concentration after 24 hours of contact with the treated products. The difference in the logarithm of the viable cell counts found on an antibacterial-treated product and an untreated product after inoculation with and incubation of bacteria were calculated with the following formula:

$$R = (Ut - U0) - (At - U0) = Ut - At$$

Where:

- U0 is the average of the common logarithm of the number of viable bacteria, in cells/cm2, recovered from the untreated test specimens immediately after inoculation
- Ut is the average of the common logarithm of the number of viable bacteria, in cells/cm2, recovered from the untreated test specimens after 24 h
- At, is the average of the common logarithm of the number of viable bacteria, in cells/cm2, recovered from the treated test specimens after 24 h.
- Number of cells (N) is expressed by CFU/$cm^2$ (CFU=Colony Forming Unit) (in case of solid material)
- C is the mean of CFU
- D is the dilution factor
- V is the volume of SCDLP broth added to the sample
- A is the area recovered by the PET film

d) Preparation of Blown Film

Films were produced on a Colin teachline single screw extruder equipped with a blown film die and film take up unit. The different temperature zones of the extruder were set at 140, 165, 165, 165 respectively, the film die temperature was set at 165. A die width of 1.2mm was used. The screw speed was set at 45rpm. The frost line height was maintained at 100mm.

4. Results

Table 2: Measurement results.

| Co-monomer | co-monomer content NMR | MFI | E. Coli | S. Aureus |
|---|---|---|---|---|
| | [mol%] | [g/10 min] | [log R] | [log R] |
| | | | | |
| MADAME | 1,2 | 5,6 | 4,23 | 3,91 |
| DMAEA | 1,38 | 3,2 | 4,47 | 3,39 |
| PMMA | 1,13 | 1,26 | 4,47 | 3,76 |

According to the ISO method, the "threshold of activity" is set to 2 where below that value, no antimicrobial activity can be claimed. As can be seen in Table 2, the two copolymers display all excellent antimicrobial activities. Furthermore, it was possible to produce a film from all copolymers. The film exhibited a smooth surface without gels.

## Claims

1. Use of an ethylene copolymer having a melt flow index (MFI) of at most ≤ 45 g/10min as measured according to ISO1133:2011 measured at 190 °C and 2.16 kg and / or having an average molecular weight Mw ≥ 50 kg/mol for production of packaging applications, production of food packages or production of film applications, wherein the ethylene copolymer is obtained via a process for the production of ethylene copolymers in a free-radical high-pressure polymerization in a tubular reactor, wherein

    • the process comprises a feed composition comprising ethylene and one or more co-monomers as reactants wherein at least one of the co-monomers is a compound having the structure of Formula (I):

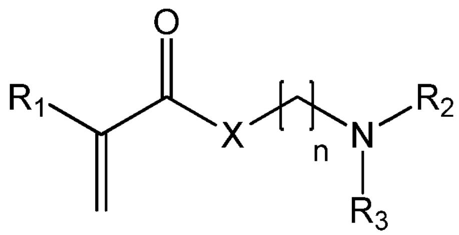

Formula (I)

    wherein

    $R_1$ = H or $CH_3$;
    X=O or NH;
    n=1-10
    $R_2$, $R_3$ = H or $CH_3$ or saturated aliphatic structure consisting of hydrogen atoms and 1-10 carbon atoms, wherein the aliphatic structure can be linear, branched and/or cyclic; and wherein $R_2$ and $R_3$ can be individually selected;
    and wherein

    • the tubular reactor is operated at a pressure of ≥ 200 and ≤ 280 MPa;
    • the average reaction peak temperature is ≥ 220°C and ≤ 300°C;
    • the composition comprising one or more of co-monomers is fed to the reactor in one or more feed inlets of said tubular reactor; and
    • each co-monomer according to Formula (I) is fed to the tubular reactor in quantities of ≤ 2.0 mol % with regard to the total feed composition of ethylene and the one or more co-monomers,

    wherein the production of packaging applications, production of food packages or production of film applications is performed by converting the ethylene copolymer into a film.

2. Use according to claim 1 wherein the co-monomer is a compound according to Formula (II)

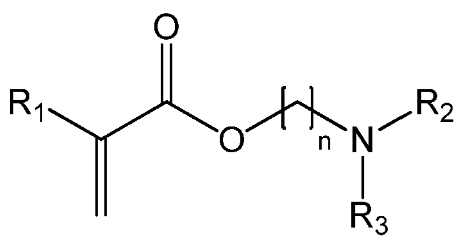

Formula (II)

    wherein

    R1 = H or $CH_3$;

n = 1-10
$R_2$, $R_3$ = H or $CH_3$ or saturated aliphatic structure consisting of hydrogen atoms and 1-10 carbon atoms, wherein the aliphatic structure can be linear, branched and/or cyclic; and wherein $R_2$ and $R_3$ can be individually selected.

**3.** Use according to claim 1 wherein the compound of Formula I is selected from 2-Aminoethyl methacrylate, 2-Aminoethyl acrylate, 2-(Dimethylamino)ethyl methacrylate, 2-(Dimethylamino)ethyl acrylate, 3-(Dimethylamino)propyl methacrylate, 3-(Dimethylamino)propyl acrylate, 2-(Diethylamino)ethyl methacrylate, 2-(Diethylamino)ethyl acrylate, 2-(tert-Butylamino)ethyl methacrylate, 2-(tert-Butylamino)ethyl acrylate, 2-(Diisopropylamino)ethyl methacrylate, 2-(Diisopropylamino)ethyl acrylate, 2-Methylaminoethyl methacrylate, 2-Dimethylaminopropyl methacrylate, 2-Aminoethylmethacrylamide, N-[3-(Dimethylamino)propyl]methacrylamide and/or N-(3-Aminopropyl)methacrylamide.

**4.** Use according to any one of claims 1-3 wherein the ethylene copolymer has a melt flow index (MFI) of at least ≥ 0.10 g/10min or at least ≥ 1.0 g/10min and/or at most ≤ 40 g/10min or at most ≤ 30 g/10min or at most ≤ 15 g/10min or at most ≤ 10 g/10min, as measured according to. ISO1133:2011 measured at 190 °C and 2.16 kg.

**5.** Use according to any one of claims 1-4 wherein the co-monomer content in the feed composition is at least ≥ 0.05 mol% or at least ≥ 0.08 mol%, or at least ≥ 0.1 mol% of one or more co-monomers and/or at most ≤ 0.6 mol% or at most ≤ 0.8 mol% or at most ≤ 1.0 mol% or at most ≤ 2.0 mol% with respect to the total feed composition of ethylene and the one or more co-monomers.

**6.** Use according to any one of claims 1-5 wherein the content of the co-monomer in the ethylene copolymer is at least ≥ 0.2 mol% or at least ≥ 0.3 mol%, or at least ≥ 0.4 mol% of one or more co-monomers and/or at most ≤ 3.5 mol%, at most ≤ 4 mol% or at most ≤ 5 mol% or at most ≤ 6 mol% with respect to the total mol% of ethylene and the one or more co-monomers in the ethylene copolymer.

**7.** Use according to any one of claims 1-6 wherein the ethylene copolymer has an antimicrobial activity as measured by a log R value according to ISO22196 **characterised in that** log R is at least ≥ 4 for E. Coli and at least ≥ 3.5 for S. Aureus.

**8.** Use according to any one of claims 1-7 wherein the feed composition comprising one or more co-monomers is fed to the tubular reactor at a first feed inlet and at least a second feed inlet, in which said second feed inlet is located at a position along the tubular reactor downstream from said first inlet, in the direction of the product flow in the tubular reactor.

**9.** Use according to claim 8 wherein the composition comprising one or more free radical initiators that is fed to the tubular reactor at said first feed inlet is different in composition compared to the composition that is fed to the tubular reactor at said second feed inlet.

**10.** Use according to any one of claims 1-9 wherein the free radical initiator is a peroxide.

**11.** Use according to any one of claims 1-10 wherein the converting the ethylene copolymer into the film is performed by film blowing.

**12.** Use according to any one of claims 1-10 wherein the converting the ethylene copolymer is performed by film casting.

**13.** Use according to any one of claims 1-12 wherein the ethylene copolymer is used for said production without blending with a further polymer.

**14.** Use according to any one of claims 1-13 wherein the packaging applications, the food packages or the film applications has a layer for coming into contact with food and at least 95 wt% of said layer is the ethylene copolymer.

## Patentansprüche

**1.** Verwendung eines Ethylencopolymers mit einem Schmelzflussindex (MFI) von höchstens ≤ 45 g/10 min, gemessen nach ISO1133:2011, gemessen bei 190 °C und 2,16 kg und/oder mit einem durchschnittlichen Molekulargewicht Mw ≥ 50 kg/mol zur Herstellung von Verpackungsanwendungen, Herstellung von Lebensmittelverpackungen oder

Herstellung von Folienanwendungen, wobei das Ethylencopolymer durch ein Verfahren zur Herstellung von Ethylencopolymeren in einer freien radikalen Hochdruckpolymerisation in einem Rohrreaktor erhalten wird, wobei

• das Verfahren eine Zuführungszusammensetzung umfasst, die Ethylen und ein oder mehrere Co-Monomere als Reaktanten umfasst, wobei mindestens eines der Co-Monomere eine Verbindung mit der Struktur der Formel (I) ist:

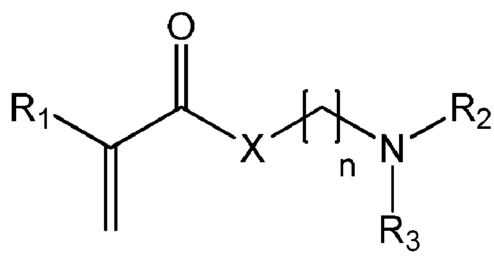

Formel (I)

wobei

$R_1$ = H oder $CH_3$;
X = O oder NH;
n = 1-10
$R_2$, $R_3$ = H oder $CH_3$ oder eine gesättigte aliphatische Struktur bestehend aus Wasserstoffatomen und 1-10 Kohlenstoffatomen, wobei die aliphatische Struktur linear, verzweigt und/oder zyklisch sein kann; und wobei $R_2$ und $R_3$ individuell ausgewählt werden können;
und wobei

• der Rohrreaktor bei einem Druck von ≥ 200 und ≤ 280 MPa betrieben wird;
• die durchschnittliche Reaktionsspitzentemperatur ≥ 220 °C und ≤ 300 °C beträgt;
• die Zusammensetzung, die ein oder mehrere Co-Monomere umfasst, dem Reaktor über einen oder mehrere Zuführungseinlässe des Rohrreaktors zugeführt wird; und
• jedes Co-Monomer gemäß Formel (I) dem Rohrreaktor in Mengen von ≤ 2,0 Mol-% in Bezug auf die gesamte Zuführungszusammensetzung aus Ethylen und dem einen oder den mehreren Co-Monomeren zugeführt wird,

wobei die Herstellung von Verpackungsanwendungen, die Herstellung von Lebensmittelverpackungen oder die Herstellung von Folienanwendungen durch Umwandlung des Ethylen-Copolymers in eine Folie durchgeführt wird.

**2.** Verwendung nach Anspruch 1, wobei das Co-Monomer eine Verbindung gemäß Formel (II) ist

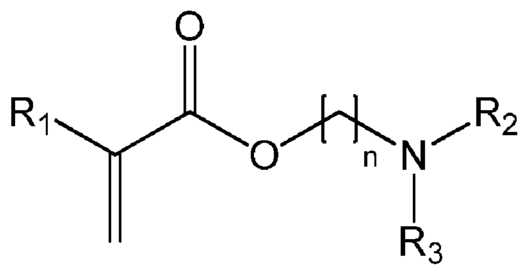

Formel (II)

wobei

R1 = H oder $CH_3$;
n = 1-10

$R_2$, $R_3$ = H oder $CH_3$ oder eine gesättigte aliphatische Struktur bestehend aus Wasserstoffatomen und 1-10 Kohlenstoffatomen, wobei die aliphatische Struktur linear, verzweigt und/oder zyklisch sein kann; und wobei $R_2$ und $R_3$ individuell ausgewählt werden können.

**3.** Verwendung nach Anspruch 1, wobei die Verbindung der Formel I ausgewählt ist aus 2-Aminoethylmethacrylat, 2-Aminoethylacrylat, 2-(Dimethylamino)ethylmethacrylat, 2-(Dimethylamino)ethylacrylat, 3-(Dimethylamino)propylmethacrylat, 3-(Dimethylamino)propylacrylat, 2-(Diethylamino)ethylmethacrylat, 2-(Diethylamino)ethylacrylat, 2-(tert-Butylamino)ethylmethacrylat, 2-(tert-Butylamino)ethylacrylat, 2-(Diisopropylamino)ethylmethacrylat, 2-(Diisopropylamino)ethylacrylat, 2-(Methylaminoethylmethacrylat), 2-Dimethylaminopropylmethacrylat, 2-Aminoethylmethacrylamid, N-[3-(Dimethylamino)propyl]methacrylamid und/oder N-(3-Aminopropyl)methacrylamid.

**4.** Verwendung nach einem der Ansprüche 1 bis 3, wobei das Ethylen-Copolymer einen Schmelzflussindex (MFI) von mindestens ≥ 0,10 g/10 min oder mindestens ≥ 1,0 g/10 min und/oder höchstens ≤ 40 g/10 min oder höchstens ≤ 30 g/10 min oder höchstens ≤ 15 g/10 min oder höchstens ≤ 10 g/10 min aufweist, gemessen nach ISO1133:2011, gemessen bei 190 °C und 2,16 kg.

**5.** Verwendung nach einem der Ansprüche 1-4, wobei der Co-Monomer-Gehalt in der Zuführungszusammensetzung mindestens ≥ 0,05 Mol-% oder mindestens ≥ 0,08 Mol-% oder mindestens ≥ 0,1 Mol-% eines oder mehrerer Co-Monomere und/oder höchstens 0,6 Mol-% oder höchstens ≤ 0,8 Mol-% oder höchstens ≤ 1,0 Mol-% oder höchstens ≤ 2,0 Mol-% in Bezug auf die gesamte Zuführungszusammensetzung aus Ethylen und dem einen oder den mehreren Co-Monomeren beträgt.

**6.** Verwendung nach einem der Ansprüche 1-5, wobei der Gehalt des Co-Monomers im Ethylen-Copolymer mindestens ≥ 0,2 Mol-% oder mindestens ≥ 0,3 Mol-% oder mindestens ≥ 0,4 Mol-% eines oder mehrerer Co-Monomere und/oder höchstens ≤ 3,5 Mol-%, höchstens ≤ 4 Mol-% oder höchstens ≤ 5 Mol-% oder höchstens ≤ 6 Mol-% in Bezug auf den Gesamtwert von Mol-% von Ethylen und dem einen oder den mehreren Co-Monomeren im Ethylen-Copolymer beträgt.

**7.** Verwendung nach einem der Ansprüche 1-6, wobei das Ethylen-Copolymer eine antimikrobielle Aktivität, gemessen durch einen Log-R-Wert gemäß ISO22196, aufweist, **dadurch gekennzeichnet, dass** Log-R mindestens ≥ 4 für E. Coli und mindestens ≥ 3,5 für S. Aureus beträgt.

**8.** Verwendung nach einem der Ansprüche 1 bis 7, wobei die Zuführungszusammensetzung, die ein oder mehrere Co-Monomere umfasst, dem Rohrreaktor an einem ersten Zuführungseinlass und mindestens einem zweiten Zuführungseinlass zugeführt wird, wobei sich der zweite Zuführungseinlass an einer Position entlang des Rohrreaktors stromabwärts von dem ersten Einlass in Richtung des Produktflusses in dem Rohrreaktor befindet.

**9.** Verwendung nach Anspruch 8, wobei die Zusammensetzung, die einen oder mehrere freie Radikalinitiatoren umfasst und dem Rohrreaktor an dem ersten Zuführungseinlass zugeführt wird, eine andere Zusammensetzung aufweist als die Zusammensetzung, die dem Rohrreaktor an dem zweiten Zuführungseinlass zugeführt wird.

**10.** Verwendung nach einem der Ansprüche 1 bis 9, wobei der freie Radikalinitiator ein Peroxid ist.

**11.** Verwendung nach einem der Ansprüche 1-10, wobei die Umwandlung des Ethylen-Copolymers in die Folie durch Folienblasen erfolgt.

**12.** Verwendung nach einem der Ansprüche 1-10, wobei die Umwandlung des Ethylen-Copolymers durch Foliengießen erfolgt.

**13.** Verwendung nach einem der Ansprüche 1 bis 12, wobei das Ethylen-Copolymer für die Herstellung ohne Vermischung mit einem weiteren Polymer verwendet wird.

**14.** Verwendung nach einem der Ansprüche 1 bis 13, wobei die Verpackungsanwendungen, die Lebensmittelverpackungen oder die Folienanwendungen eine Schicht aufweisen, die mit Lebensmitteln in Kontakt kommt, und wobei mindestens 95 Gew.-% der Schicht aus dem Ethylen-Copolymer bestehen.

**Revendications**

**1.** Utilisation d'un copolymère d'éthylène présentant un indice de fluage (MFI) d'au plus ≤ 45 g/10 min tel que mesuré selon la norme ISO1133:2011 mesuré à 190 °C et 2,16 kg et/ou ayant un poids moléculaire moyen Mw ≥ 50 kg/mol pour la production d'applications d'emballage, la production d'emballages alimentaires ou la production d'applications de films, dans laquelle le copolymère d'éthylène est obtenu par le biais d'un processus pour la production de copolymères d'éthylène dans une polymérisation haute pression radicalaire dans un réacteur tubulaire, dans laquelle

- le processus comprend une composition d'apport comprenant de l'éthylène et un ou plusieurs comonomères en tant que réactifs dans laquelle au moins l'un des comonomères est un composé ayant la structure de formule (I) :

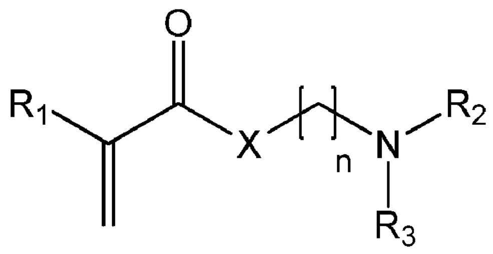

Formule (I)

dans laquelle

$R_1$ = H ou $CH_3$ ;
X = O ou NH ;
n = 1 à 10
$R_2$, $R_3$ = H ou $CH_3$ ou une structure aliphatique saturée constituée d'atomes d'hydrogène et de 1 à 10 atomes de carbone, dans laquelle la structure aliphatique peut être linéaire, ramifiée et/ou cyclique ; et dans laquelle $R_2$ et $R_3$ peuvent être choisis individuellement ;
et dans laquelle

- le réacteur tubulaire est mis en fonctionnement à une pression de ≥ 200 et ≤ 280 MPa ;
- le pic de température de réaction moyen est ≥ 220 °C et ≤ 300 °C ;
- la composition comprenant un ou plusieurs comonomères est apportée au réacteur dans une ou plusieurs entrées d'apport dudit réacteur tubulaire ; et
- chaque comonomère selon la formule (I) est apporté au réacteur tubulaire dans des quantités de ≤ 2,0 % en moles vis-à-vis de la composition d'apport totale d'éthylène et des un ou plusieurs comonomères,

dans laquelle la production d'applications d'emballages, la production d'emballages alimentaires ou la production d'applications de films est réalisée par conversion du copolymère d'éthylène en film.

**2.** Utilisation selon la revendication 1 dans laquelle le comonomère est un composé selon la formule (II)

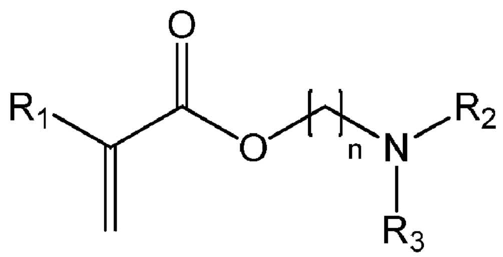

Formule (II)

dans laquelle

R1 = H ou $CH_3$ ;
n = 1 à 10
$R_2$, $R_3$ = H ou $CH_3$ ou une structure aliphatique saturée constituée d'atomes d'hydrogène et de 1 à 10 atomes de carbone, dans laquelle la structure aliphatique peut être linéaire, ramifiée et/ou cyclique ; et dans laquelle $R_2$ et $R_3$ peuvent être choisis individuellement.

3. Utilisation selon la revendication 1 dans laquelle le composé de formule I est choisi parmi le méthacrylate de 2-aminoéthyle, l'acrylate de 2-aminoéthyle, le méthacrylate de 2-(diméthylamino)éthyle, l'acrylate de 2-(diméthylamino)éthyle, le méthacrylate de 3-(diméthylamino)propyle, l'acrylate de 3-(diméthylamino)propyle, le méthacrylate de 2-(diéthylamino)éthyle, l'acrylate de 2-(diéthylamino)éthyle, le méthacrylate de 2-(tert-butylamino)éthyle, l'acrylate de 2-(tert-butylamino)éthyle, le méthacrylate de 2-(diisopropylamino)éthyl, l'acrylate de 2-(diisopropylamino)éthyle, le méthacrylate de 2-méthylaminoéthyle, le méthacrylate de 2-diméthylaminopropyle, le 2-aminoéthylméthacrylamide, le N-[3-(diméthylamino)propyl]méthacrylamide et/ou le N-(3-aminopropyl)méthacrylamide.

4. Utilisation selon l'une quelconque des revendications 1 à 3 dans laquelle le copolymère d'éthylène présente un indice de fluage (MFI) d'au moins ≥ 0,10 g/10 min ou d'au moins ≥ 1,0 g/10 min et/ou d'au plus ≤ 40 g/10 min ou d'au plus ≤ 30 g/10 min ou d'au plus ≤ 15 g/10 min ou d'au plus ≤ 10 g/10 min, tel que mesuré selon la norme ISO1133:2011 mesuré à 190 °C et 2,16 kg.

5. Utilisation selon l'une quelconque des revendications 1 à 4 dans laquelle la teneur en comonomère dans la composition d'apport est d'au moins ≥ 0,05 % en moles ou d'au moins ≥ 0,08 % en moles, ou d'au moins ≥ 0,1 % en moles d'un ou de plusieurs comonomères et/ou d'au plus ≤ 0,6 % en moles ou d'au plus ≤ 0,8 % en moles ou d'au plus ≤ 1,0 % en moles ou d'au plus ≤ 2,0 % en moles vis-à-vis de la composition d'apport totale d'éthylène et des un ou plusieurs comonomères.

6. Utilisation selon l'une quelconque des revendications 1 à 5 dans laquelle la teneur en comonomère dans le copolymère d'éthylène est d'au moins ≥ 0,2 % en moles ou d'au moins ≥ 0,3 % en moles, ou d'au moins ≥ 0,4 % en moles d'un ou de plusieurs comonomères et/ou d'au plus ≤ 3,5 % en moles, d'au plus ≤ 4 % en moles ou d'au plus ≤ 5 % en moles ou d'au plus ≤ 6 % en moles vis-à-vis du pourcentage en moles total d'éthylène et des un ou plusieurs comonomères dans le copolymère d'éthylène.

7. Utilisation selon l'une quelconque des revendications 1 à 6 dans laquelle le copolymère d'éthylène présente une activité antimicrobienne telle que mesurée par une valeur log R selon la norme ISO22196 **caractérisée en ce que** log R est d'au moins ≥ 4 pour E. Coli et d'au moins ≥ 3,5 pour S. Aureus.

8. Utilisation selon l'une quelconque des revendications 1 à 7 dans laquelle la composition d'apport comprenant un ou plusieurs comonomères est apportée au réacteur tubulaire au niveau d'une première entrée d'apport et d'au moins une seconde entrée d'apport, ladite seconde entrée d'apport étant située à une position le long du réacteur tubulaire en aval de ladite première entrée, dans la direction de l'écoulement de produit dans le réacteur tubulaire.

9. Utilisation selon la revendication 8 dans laquelle la composition comprenant un ou plusieurs initiateurs radicalaires qui est apportée au réacteur tubulaire au niveau de ladite première entrée d'apport est de composition différente en comparaison avec la composition qui est apportée au réacteur tubulaire au niveau de ladite seconde entrée d'apport.

10. Utilisation selon l'une quelconque des revendications 1 à 9 dans laquelle l'initiateur radicalaire est un peroxyde.

11. Utilisation selon l'une quelconque des revendications 1 à 10 dans laquelle la conversion du copolymère d'éthylène en film est réalisée par extrusion-soufflage.

12. Utilisation selon l'une quelconque des revendications 1 à 10 dans laquelle la conversion du copolymère d'éthylène est réalisée par coulage de feuille mince.

13. Utilisation selon l'une quelconque des revendications 1 à 12 dans laquelle le copolymère d'éthylène est utilisé pour ladite production sans mélange avec un polymère supplémentaire.

14. Utilisation selon l'une quelconque des revendications 1 à 13 dans laquelle les applications d'emballages, les emballages alimentaires ou les applications de films ont une couche destinée à entrer en contact avec des aliments et au moins 95 % en poids de ladite couche est constitué du copolymère d'éthylène.